# EUROPEAN PATENT SPECIFICATION

(11) **EP 3 257 710 B1**
(45) Date of publication and mention of the grant of the patent: **16.10.2019**
(21) Application number: 17176342.8
(22) Date of filing: 16.06.2017
(51) Int. Cl.: B60S 1/38

(54) **WIPER BLADE**
WISCHERBLATT
BALAI D'ESSUIE-GLACE

(30) Priority: 17.06.2016 KR 20160075623; 28.11.2016 US 201662427142 P
(43) Date of publication of application: 20.12.2017
(73) Proprietor: Kimblade Co., Ltd., Suwon-si, Gyeonggi-do 441-460 (KR)
(72) Inventor: KIM, Hyungwoo, 441-460 Suwon-si (KR)
(74) Representative: Gosdin, Michael

(56) References cited:
- EP-A2- 1 059 213
- WO-A1-2012/103375
- DE-A1-102012 219 805
- DE-A1-102013 226 928
- US-A- 5 251 357

## Description

### FIELD OF THE INVENTION

The present invention relates generally to the wiper blade, by banacing the opposite characteristics between the ease of operation and the cleaning force, the overall shape of the wiper blade is inclined laterally with elasticity in accordance with the moving direction of the blade mounting means for ease of operation , and the contact portion of the wiper blade for performing the cleaning is capable of maintaining an angle close to a right angle with respect to the cleaning surface, so that the wiper blade is also excellent in cleaning force.

### BACKGROUND OF THE INVENTION

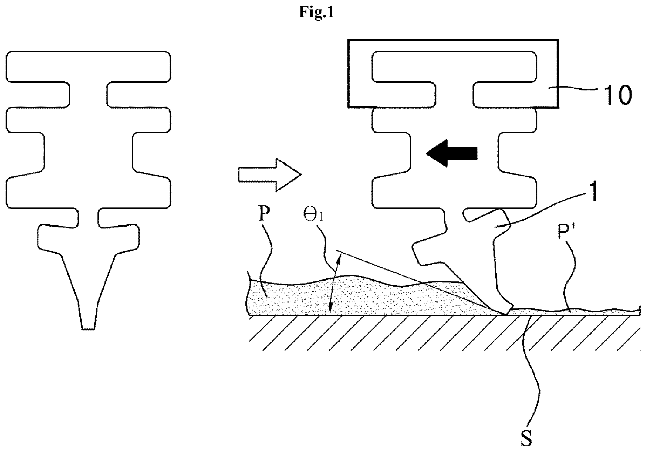

Generally as shown in Fig. 1, wiper blade 1 is mounted at blate mounting means 10 and operated to clean pollution P' at the cleaning surface S.

In the operation of the wiper blade, in order to move and operate smoothly in accordance with the movement of the blade mounting means 10, it is efficient that the wiper blade has a shape such that the wiper blade inclined laterally with elasticity in accordance with the moving direction of the blade mounting means.

On the contrary to this, when the cleaning force of the wiper blade is taken into consideration, the cleaning force is excellent as the wiper blade maintains an angle close to the cleaning surface S at right angles. When the blade mounting means 10 has a relatively small angle θ1 (typically 5 to 30 degrees) with respect to the cleaning surface S by elasticity along the moving direction of the blade mounting means 10 as shown in FIG. 1, the wiper blade comes into surface contact with the cleaning surface S, therefor the cleaning force is deteriorated and the residual contamination P 'remains.

Most of the existing inventions do not match the opposite characteristics between the ease of operation and the cleaning force. The prior art "Blade for automobile wiper (Korean Utility Model KR20-1998-021842A)" only discloses two blades projecting downward from the blade and connected to the windshield so as to perform direct wiping.

Another prior art patent, "Wiper Blade (Korean Registered Patent KR10-0488972B)" only discloses an insertion groove formed in a longitudinal direction on the upper end of both side faces of the upper end of the wiper blade, and contacts the window of the vehicle at the lower end of the insertion groove. And the auxiliary wings are formed integrally downward on both sides of the wing at the lower portion of the wiper blade in the vehicle wiper blade in which the wings for removing are integrally formed.

Examples of related prior-art can be also found in the following document: DE 102012219805 A1, EP 1059213 A2, DE 102013226928 A1 and US 5251357 A.

DE 10 2012 219 805 A1 discloses a wiper blade representing the closest prior art to claim 1.

### SUMMARY OF THE INVENTION

Accordingly, in order to overcome the problems of the prior art, is an object of the present invention to provide a wiper blade, by balancing the opposite characteristics between the ease of operation and the cleaning force. The wiper blade comprises a mounting part which is mounted at a blade mounting means, and a single contacting edge, and an angle maintaining bendable part continuously formed from the mounting part and connecting the mounting part and the contacting edge, wherein the angle maintaining bendable part has one longitudinal cavity, and wherein the angle maintaining bendable part and the internal cavity form a 4 bar linkage structure which is configured to maintain an angle of the mounting part and the contacting edge while the contacting edge is in line contact with a cleaning surface to clean the pollution and the overall shape of the wiper blade is inclined laterally in accordance with the moving direction of the blade mounting means and wherein the longitudinal internal cavity has a rectangular shape.

In accordance with an aspect of the present invention, the above object can be accomplished by providing a wiper blade made of elastic material, which comprise: a mounting part which is mounted at a blade mounting mean; an angle maintaining bendable part continuously formed from the mounting part and have one or more longitudinal internal cavity; and a contacting edge continuously formed from the angle maintaining bendable part and line contact to a cleaning surface to clean the pollution while angle to the mounting part is maintained by means of 4 link structure provided by the angle maintaining bendable part.

Further, in at least one embodiment, the internal cavity has rounded subsidences at each corners of the rectangular shape.

Further, in at least one embodiment, the outer surface of the contacting edge has the coating layer.

Further, in at least one embodiment, the contacting edge is composed of low friction silicone rubber.

Further, in at least one embodiment, the wiper blade further comprising: a porous sorption member installed to lower part of the contacting edge, and the porous sorption member temporarily absorbs the pollution and then discharges the pollution again by pressing.

According to the present invention, the opposite characteristics between the ease of operation and the cleaning force can be harmonized, the overall shape of the wiper blade is inclined laterally with elasticity in accordance with the moving direction of the blade mounting means for ease of operation , and the contact portion of the wiper blade for performing the cleaning is in line contact with the cleaning surface S, while angle to the mounting part is maintained by means of 4 link structure provided by the angle maintaing bendable part, so that the wiper blade is also excellent in cleaning force.

### BRIEF DESCRIPTION OF THE DRAWINGS

Fig. 1 is a schematic view showing the problem of prior wiper blade.
Fig. 2 is a sectional view of a first embodiment of present invention.

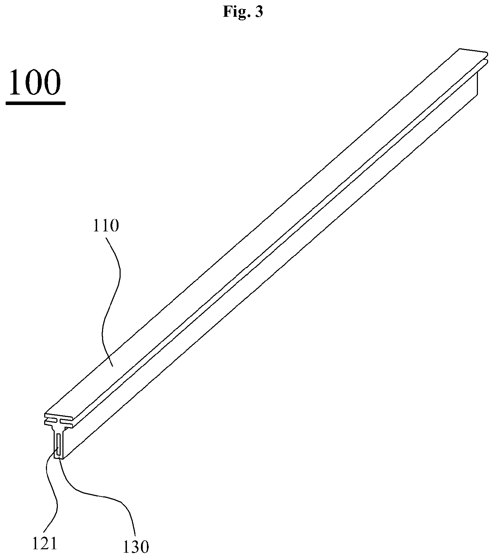

Fig. 3 is the perspective view of the first embodiment of present invention.
Fig. 4 is a sectional view of a second embodiment of present invention.
Fig. 5 is a schematic view showing the operation of the first embodiment of present invention.
Fig. 6 is a sectional view of a third embodiment of present invention.
Fig. 7 is a sectional view of a fourth embodiment of present invention.
Fig. 8 is a schematic view showing the operation of the fourth embodiment of present invention.

The reference numbers and characters for the drawings and the following description are provided below:
S: cleaning surface
P: pollution
10: blade mounting mean
100: wiper blade
110: mounting part
111: clamping member
120: angle maintaing bendable part
121: internal cavity
122: rounded subsidence
130: contacting edge
131: coating layer
140: bending neck
141: supporting protrusion
142: supporting arm
160: porous sorption member

### DETAILED DESCRIPTION OF THE INVENTION

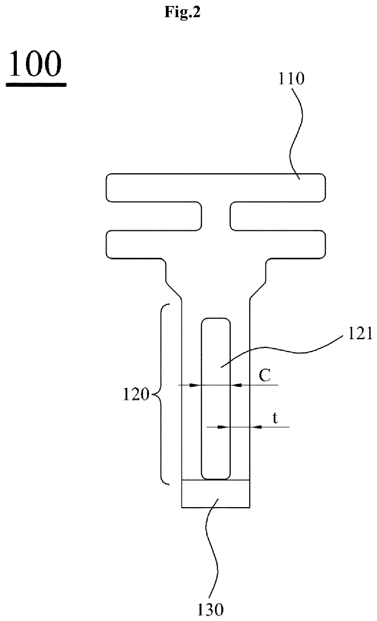

According to the preferred embodiment of the present invention, a wiper blade 100 is made of an elastic material and comprises a mounting part 110, an angle maintaining bendable part 120 and a contacting edge 130 as shown in FIG. 2. The elastic material constituting the wiper blade 100 may be made of rubber (NR, CR, NCR, EPDM) or a silicone material.

As shown in Fig. 2, the mounting part 110 is mounted to the blade mounting means 10 and may be manufactured in various forms according to the structure and shape of the blade mounting means 10.

As shown in FIG. 2, the angle maintaing bendable part 120 is continuously formed from the mounting part 110, and has one or more longitudinal internal cavity 121.

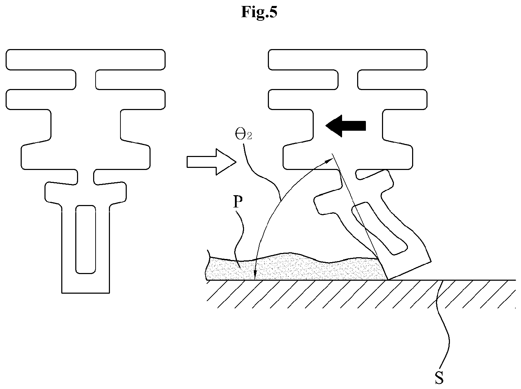

According to the internal cavity 121, the angle maintaing bendable part 120 has a structure similar to a 4-bar linkage structure that connects the mounting part 110 and the contacting edge 130. Therefore, having adequate strength due to elasticity, the relative angle of the mounting part 110 and the contacting edge 130 is limited and relatively well maintained as shown in FIG. 5. And the overall shape of the wiper blade 100 is inclined laterally with elasticity in accordance with the moving direction of the blade mounting means 10.

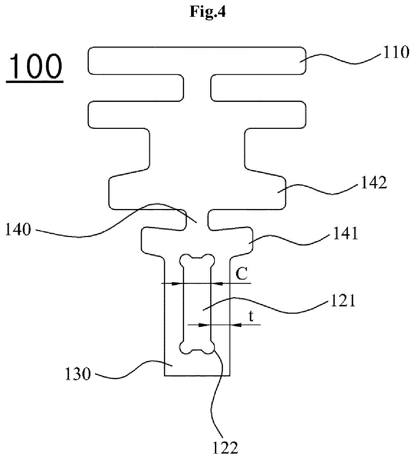

In order to the angle maintaing bendable part 120 has a structure similar to a 4-bar linkage structure, it is preferable that the the internal cavity 121 has a rectangular shape as shown in FIG. 2. In order to the angle maintaing bendable part 120 has a structure more similar to a 4-bar linkage structure, it is preferable that the internal cavity 121 further has rounded subsidences 122 at each corners of the rectangular shape as shown in FIG. 4. According to the rounded subsidences 122 which has been formed at the portion corresponding to the connection between the links in the four-bar linkage structure, the portion corresponding to the connection between the links becomes more freely rotatable, therefore the angle maintaing bendable part 120 have an operating characteristic that is more similar to the 4-bar linkage structure.

Meanwhile, in order to make a structure similar to a four-bar link with an elastic material, the angle maintaing bendable part 120 may have suitable hardeness for both elasticity and to perform a function of a link arm. So, both side portions of that the internal cavity 121 are not excessively bent or pressed and contracted while having appropriate structural rigidity. To achieve that characteristics, the thickness t of both side portions of the internal cavity 121 may be in the range of 0.2 to 1.2 mm and the angle maintaing bendable part 120 may have the shore hardness A type of 40 to 90.

If the thickness t of the both side portions of the internal cavity 121 is thinner than said range of thickness or the hardness of the of the both side portions of the internal cavity 121 is smaller than said hardness, the structural strength of both side portions of the internal cavity 121 is weakened and excessively bent or pressed to contract, So that the contact angle of the contacting edge 130 becomes small as in the case of the prior art. On the contrary to this, if the thickness t of both side portions of the internal cavity 121 is thicker than said range of thickness or the hardness of the of the both side portions of the internal cavity 121 is larger than said hardness, the structural strength of both side portions of the internal cavity 121 becomes stronger than necessary, the operation of the connecting portions between the links can not be smoothly implemented.

The structural strength of both side portions of the internal cavity 121, which functions as two link arms connecting the upper side and the lower side, has a significant influence on the length in the vertical direction (that is, the vertical height of the internal cavity 121). If the vertical height of the internal cavity 121 becomes larger than necessary and the ratio of the height of the internal cavity 121 to the thickness t of both side portions of the internal cavity 121 becomes large, the structural strength of both side portions of the internal cavity 121 is relatively weakened, so that the wiper blade 100 is excessively bent or pressed to be contracted, so that the contact angle of the contacting edge 130 is reduced, as in the prior conventional wiper blade. On the contrary to this, if the vertical height of the internal cavity 121 is smaller than necessary and the ratio of the height of the internal cavity 121 to the thickness t of both side portions of the internal cavity 121 becomes small, the structural strengths of both side portions of the internal cavity 121 are strengthened more than necessary, there is a high possibility that the operation of the connection portion between the links in the four-linkage structure can not be smoothly implemented. Therefore, when the thickness t of both side portions of the internal cavity 121 is in the range of 0.2 to 1.2 mm, the height of the internal cavity 121 preferably ranges from 2.0 to 6.0 mm.

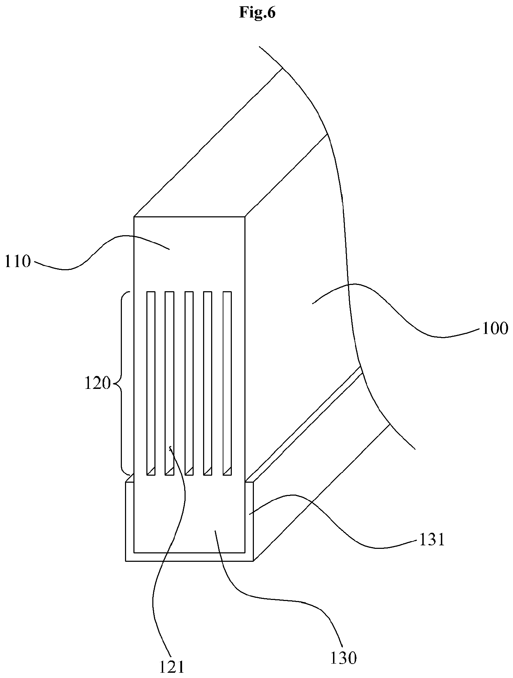

According to another embodiment of the present invention, the angle maintaing bendable part 120 may have a plurality of the internal cavity 121 as shown in FIG. 6.

By plurality of the internal cavity 121, the angle maintaing bendable part 120 has a structure similar to mulitiple 4-bar linkage structure. Therefor having adequate strength due to elasticity, the relative angle of the mounting part 110 and the contacting edge 130 is limited better and relatively well maintained and the overall shape of the wiper blade 100 is inclined laterally with elasticity in accordance with the moving direction of the blade mounting means 10.

The contacting edge 130 is continuously formed from the angle maintaing bendable part 120 as shown in Fig.2, and line contact to a cleaning surface (S) to clean the pollution (P) as shown in Fig.5. As discrived above, while angle to the mounting part (110) is maintained by means of 4 -bar linkage sturucture provided by the angle maintaing bendable part (120), the contacting edge 130 can make a line contact with the cleaning surface S with a relatively large angle θ2. Therefore, the contact area where the contacting edge 130 contacts the cleaning surface S is kept small, so that the frictional force due to the operation is reduced, and the pressing force against the cleaning surface (S) becomes rather strong thus the cleaning force for wiping the pollution P become excellent. Meanwhile, the cross section of the contacting edge 130 can be a shape of part of a polygon or a shape of double or triple blades.

As shown in Fig. 6, the outer surface of the contacting edge 130 may have the coating layer 131 to increase the strength while reducing friction. As the material of the coating layer 131, it is possible to select one of various synthetic resins or silicone. In one embodiment, it is preferable that the coating layer 131 is made of a silicone material or a Teflon material having a low frictional force. The coating layer 131 may be formed by bonding a high-strength film.

As shown in Fig. 2, unlike the mounting part 110 and the angle maintaing bendable part 120, the contacting edge 130 may made of a low friction silicone material. In this case, it is preferable that the wiper blade 100 is manufactured such that the wiper blade 100 is extrusion-molded and then cutt. Moreover, the mounting part 110 and the angle maintaing bendable part 120 are extrusion-molded simultaneously with the contacting edge 130 which consist of another characteristic silicone material.

It is preferable that the wiper blade 100 is inclined at a predetermined angle in accordance with the operation of the reciprocating wiper so that the wiper can operate more smoothly. For this purpose, a bending neck 140 may be formed between the mounting part 110 and the angle maintaing bendable 120 as shown in FIG. 4. Moreover, the predetermined angle may be in a range of about 5 to 30 degrees so that the angle θ2 at which the contacting edge 130 contacts the cleaning surface S can be maintained at a relatively large angle. In the pursuit of this purpose a supporting arm 142 is further formed at the lower end of the mounting part 110 and a supporting protrusion 141 is further formed at the upper end of the angle maintaing bendable 120 as shown in FIG. 4.

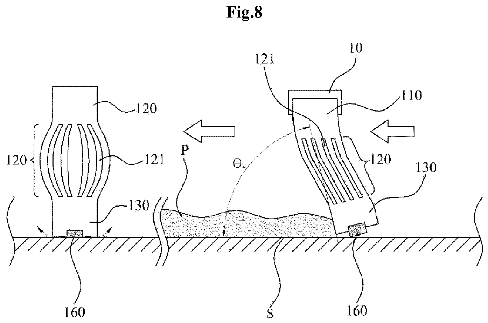

Therefore, as shown in Fig. 8, when the bending neck 140 is bent at the predetermined angle according to the operation of the wiper, the surporting protrusion 141 is contacted with the supporting arm 142 and prevent more bending, thus the angle θ2 at which the contacting edge 130 contacts the cleaning surface S is limited to be maintained at a relatively large angle, while the wiper blade 100 is being inclined by a predetermined angle corresponding to the operating direction.

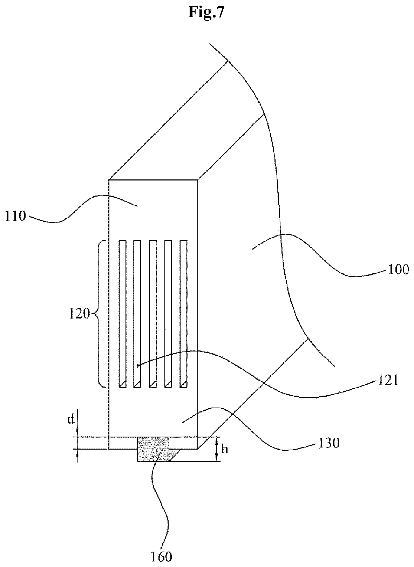

As shown in Fig. 7, the porous sorption member 160 installed to lower part of the contacting edge 130, and the porous sorption member 160 is made of porous sorption material, temporarily absorb the remaining pollution P which can not be removed by th contacting edge 130, and then discharge the pollution (P) again by pressing when the direction of operation is changing.

The porous sorption member 160 may be formed in various sizes and shapes depending on its operating characteristics. When the porous sorption member 160 is emphasized to maintain the state where the porous sorption member 160 is firmly mounted on the contact part 130, the porous sorption member 160 is inserted to lower part of the contacting edge 130 by a predetermined depth (d) as shown in FIG. 7. The predetermined depth d may be less than half the vertical height of the porous sorption member 160 in order to ensure a sufficient compression effect so that the pollution absorbed by the porous sorption member 160 can be efficiently discharged again by compression.

When the porous sorption member 160 focuses on the operating characteristic in order to enhance the effect of absorbing the residual pollution, the porous sorption member 160 has narrow width and a long length.

## Claims

1. A wiper blade comprising:
a mounting part (110) which is mounted at a blade mounting means (10);
a single contacting edge (130);
an angle maintaining bendable part (120) continuously formed from the mounting part (110) and connecting the mounting part (110) and the contacting edge (130),
wherein said angle maintaining bendable part (120) has one longitudinal internal cavity (121);
wherein the angle maintaining bendable part (120) and the one internal cavity (121) form a 4-bar linkage structure which is configured to maintain an angle of the mounting part (110) and the contacting edge (130) while the contacting edge (130) being in line contact with a cleaning surface (S) to clean the pollution (P) and the overall shape of the wiper blade is inclined laterally in accordance with the moving direction of the blade mounting means (10),
wherein said one longitudinal internal cavity has a rectangular shape.

2. The wiper blade of claim 1, wherein the wiper blade is made of elastic material.

3. The wiper blade of claim 1, wherein the internal cavity (121) has rounded subsidences at each corners of the rectangular shape.

4. The wiper blade of claim 1, wherein the outer surface of the contacting edge (130) has the coating layer (131).

5. The wiper blade of claim 1, wherein the contacting edge (130) is composed of low friction silicone rubber.

6. The wiper blade of claim 1, further comprising a porous sorption member (160) installed to lower part of the contacting edge (130), and the porous sorption member (160) temporarily absorb the pollution (P) and then discharge the pollution (P) again by pressing.

## Patentansprüche

1. Wischerblatt, umfassend:
ein Befestigungsteil (110), das an einem Blattmontagemittel (10) montiert ist;
eine einzelne Kontaktkante (130);
ein winkelerhaltendes biegsames Teil (120), das kontinuierlich aus dem Befestigungsteil (110) gebildet ist und welches das Befestigungsteil (110) und die Kontaktkante (130) verbindet,
wobei das besagte winkelerhaltende biegsame Teil (120) einen longitudinalen inneren Hohlraum (121) aufweist;
wobei der winkelerhaltende biegsame Teil (120) und der eine innere Hohlraum (121) eine 4-stängige Verbindungsstruktur bilden, die ausgebildet ist, um einen Winkel des Befestigungsteils (110) und der Kontaktkante (130) aufrechtzuerhalten, während die Kontaktkante (130) in Linienkontakt mit einer Reinigungsfläche (S) steht, um die Verschmutzung (P) zu reinigen, und die Gesamtform des Wischerblattes seitlich gemäß der Bewegungsrichtung der Blattmontagemittel (10) geneigt ist,
wobei der eine longitudinale innere Hohlraum eine rechteckige Form aufweist.

2. Wischerblatt nach Anspruch 1, wobei das Wischerblatt aus elastischem Material hergestellt ist.

3. Wischerblatt nach Anspruch 1, wobei der innere Hohlraum (121) abgerundete Vertiefungen an jeder Ecke der rechteckigen Form aufweist.

4. Wischerblatt nach Anspruch 1, wobei die Außenfläche der Kontaktkante (130) die Beschichtungsschicht (131) aufweist.

5. Wischerblatt nach Anspruch 1, wobei die Kontaktkante (130) aus reibungsarmem Silikonkautschuk besteht.

6. Wischerblatt nach Anspruch 1, ferner umfassend ein poröses Sorptionselement (160), das am unteren Teil der Kontaktkante (130) angeordnet ist, und das poröse Sorptionselement (160) die Verschmutzung (P) zeitweise absorbiert und dann die Verschmutzung (P) durch Drücken wieder abgibt.

## Revendications

1. Balai d'essuie-glace comprenant :
une pièce de montage (110) qui est montée sur un moyen de montage de balai (10) ;
un bord de contact (130) unique ;
une pièce pliable de maintien d'angle (120) formée en continu à partir de la pièce de montage (110) et reliant la pièce de montage (110) et le bord de contact (130),
ladite pièce pliable de maintien d'angle (120) ayant une cavité interne longitudinale (121) ;
la pièce pliable de maintien d'angle (120) et la cavité interne (121) formant une structure de liaison à 4 barres qui est conçue pour maintenir un angle de la pièce de montage (110) et du bord de contact (130) tandis que le bord de contact (130) est en contact aligné avec une surface de nettoyage (S) pour nettoyer la pollution (P) et la forme globale du balai d'essuie-glace étant inclinée latéralement selon la direction de déplacement du moyen de montage de balai (10),
ladite cavité interne longitudinale ayant une forme rectangulaire.

2. Balai d'essuie-glace selon la revendication 1, le balai d'essuie-glace étant en un matériau élastique.

3. Balai d'essuie-glace selon la revendication 1, la cavité interne (121) ayant des affaissements arrondis à chaque angle de la forme rectangulaire.

4. Balai d'essuie-glace selon la revendication 1, la surface extérieure du bord de contact (130) ayant la couche de revêtement (131).

5. Balai d'essuie-glace selon la revendication 1, le bord de contact (130) étant composé d'un caoutchouc de silicone à faible friction.

6. Balai d'essuie-glace selon la revendication 1, comprenant en outre un élément de sorption poreux (160) installé sur la pièce inférieure du bord de contact (130), et l'élément de sorption poreux (160) absorbant temporairement la pollution (P) puis évacuant la pollution (P) par pression.
